# EUROPEAN PATENT SPECIFICATION

(11) **EP 3 869 768 B1**
(45) Date of publication and mention of the grant of the patent: **21.12.2022**
(21) Application number: 19876821.0
(22) Date of filing: 22.10.2019
(51) Int. Cl.: H04L 41/40, H04L 41/044, H04L 67/10, H04Q 11/00

(54) **DEVICE MANAGEMENT AND CONTROL METHOD, APPARATUS, AND STORAGE MEDIUM**
GERÄTEVERWALTUNGS- UND STEUERVERFAHREN, VORRICHTUNG UND SPEICHERMEDIUM
PROCÉDÉ DE GESTION ET DE COMMANDE DE DISPOSITIF, APPAREIL ET SUPPORT D'INFORMATIONS ASSOCIÉS

(30) Priority: 22.10.2018 CN 201811230879
(43) Date of publication of application: 25.08.2021
(73) Proprietor: China Mobile Communication Co., Ltd Research Institute, Beijing 100053 (CN); CHINA MOBILE COMMUNICATIONS GROUP CO., LTD, Beijing 100032 (CN)
(72) Inventor: ZHOU, Wenhui, Beijing 100053 (CN); LI, Han, Beijing 100053 (CN); ZHANG, Dechao, Beijing 100053 (CN); HU, Xintian, Beijing 100053 (CN)
(74) Representative: J A Kemp LLP
(86) International application number: PCT/CN2019/112552
(87) International publication number: WO 2020/083289

(56) References cited:
- EP-A1- 2 978 173
- EP-A1- 3 107 241
- WO-A1-2018/020317

## Description

### CROSS-REFERENCE TO RELATED APPLICATION

This application is based on and claims priority to Chinese Patent Disclosure No. 201811230879.3 filed on October 22, 2018.

### TECHNICAL FIELD

This disclosure relates to communication technologies, and more particularly, to a method, an apparatus and a storage medium for device management and control.

### BACKGROUND

With the development of cloud computing, Software Defined Network (SDN), and Network Function Virtualization (NFV) technologies, the separation of control and forwarding plane, the centralization of management and control, as well as the cloudification and softwarization tendency of the platform for management and control become the future development trends of the architecture for fixed network access technology.

In the current Gigabit-Capable PON (GPON), a GPON access network is mainly composed of an Optical Line Terminal (OLT) device and an Optical Network Unit (ONU) device, and the configuration, management and control of the ONU device are realized through an ONU Management and Control Interface (OMCI) module of the OLT device, wherein the OMCI interface is a configuration transmission channel defined in the GPON standard, and a proprietary OMCI message is established between the OLT and the ONU for providing a standard capability of acquiring, managing and controlling the ONU message.

Since the OLT devices are implemented by different manufacturers, the implementations of the OMCI modules of different manufacturers represent discordant understanding towards the standard, resulting in compatibility problems when the ONU devices interface with the OLT devices of different manufacturers. Meanwhile, in the conventional GPON access network architecture, the OMCI module is in the OLT hardware device of the manufacturer, therefore, the cost for upgrade, maintenance, and version unification is high and the upgrade period is long.

Related arts can be found in WO 2018/020317 A1 and EP 3107241 A1.

Document WO 2018/020317 A1 discloses a method of controlling data forwarding of an ONU in a PON system wherein a management entity is created in the ONU supporting management and maintenance for data forwarding rule. An OLT performs data forwarding rule management and configuration for the management entity in the ONU by expanding an OMCI message.

Document EP3107241 A1 discloses an auto configuration server configured to manage an OLT as well as the terminal under the OLT.

### SUMMARY

The present invention is defined in the claims.

In order to solve the above-mentioned technical problems, the embodiments of the present disclosure are intended to provide a method and an apparatus for device management and control, and a storage medium, thereby solving compatibility problems among the OLT devices of different manufacturers, and facilitating upgrade and maintenance of an OMCI module.

The technical solution of the present disclosure is realized as follows.

An embodiment of the present disclosure provides a method for device management and control, applied to a cloud platform. The method includes:
receiving by a processor of a cloud platform, a management and control request of at least one Passive Optical Network (PON) device; wherein the management and control request includes at least a PON device identifier;
determining, by the processor of the cloud platform, from a first association relationship, based on the at least one PON device identifier, at least one management and control module corresponding to the at least one PON device; wherein the first association relationship includes an association relationship between the at least one PON device and the management and control module; and
transmitting by the at least one management and control module the management and control request of the at least one PON device to a corresponding PON device.

In the above-mentioned solution, when the PON device is an ONU device, controlling the at least one management and control module to transmit the management and control request of the at least one PON device to the corresponding PON device includes: determining, from a second association relationship, based on at least one ONU device identifier, at least one OMCI module corresponding to at least one ONU device; wherein the second association relationship includes an association relationship between the at least one ONU device and the OMCI module; controlling the at least one management and control module to transmit a management and control request of the at least one ONU device to a corresponding OMCI module; controlling the at least one OMCI module to convert a received management and control request of the ONU device into an OMCI message; and transmitting the OMCI message of the at least one ONU device to a corresponding ONU device based on the at least one ONU device identifier.

In the above-mentioned solution, transmitting the OMCI message of the at least one ONU device to the corresponding ONU device based on the at least one ONU device identifier includes: transmitting, based on the at least one ONU device identifier, the OMCI message of the at least one ONU device to an OLT device connected to the at least one ONU device, such that the OLT device transmits the OMCI message to the corresponding ONU device.

In the above-mentioned solution, the management and control request further includes an OLT device identifier of the OLT device connected to the ONU device; transmitting the OMCI message of the at least one ONU device to an OLT device connected to the at least one ONU device includes: transmitting the OMCI message of the at least one ONU device to a corresponding OLT device based on the OLT device identifier of the OLT device connected to the ONU device.

In the above-mentioned solution, the method further includes: receiving a device message reported by the PON device.

In the above-mentioned solution, receiving the device message reported by the PON device includes at least one of: receiving by the management and control module a non-OMCI message reported by the OLT device; wherein the non-OMCI message includes at least a message reported by the ONU device; and receiving by the OMCI module an OMCI message reported by the OLT device; wherein the OMCI message includes at least a message reported by the ONU device.

The embodiment of the present disclosure further provides an apparatus for device management and control, applied to a cloud platform. The apparatus includes a communication module, a processing module, and at least one management and control module, wherein,
the communication module is configured to receive a management and control request of at least one Passive Optical Network (PON) device; wherein the management and control request includes at least a PON device identifier;
the processing module is configured to determine, from a first association relationship, based on the at least one PON device identifier, at least one management and control module corresponding to the at least one PON device; wherein the first association relationship includes an association relationship between the at least one PON device and the management and control module; and
the at least one management and control module is configured to transmit the management and control request of the at least one PON device to a corresponding PON device.

In the above-mentioned solution, the apparatus further includes at least one OMCI module; wherein the processing module is configured to determine, from a second association relationship, based on at least one ONU device identifier, at least one OMCI module corresponding to at least one ONU device, when the PON device is an ONU device; wherein the second association relationship includes an association relationship between the at least one ONU device and the OMCI module; and the at least one management and control module is configured to transmit a management and control request of the at least one ONU device to a corresponding OMCI module, the at least one OMCI module is configured to convert a received management and control request of the ONU device into an OMCI message, and transmit the OMCI message of the at least one ONU device to a corresponding ONU device based on the at least one ONU device identifier.

In the above-mentioned solution, the processing module is configured to transmit, based on the at least one ONU device identifier, the OMCI message of the at least one ONU device to an OLT device connected to the at least one ONU device, such that the OLT device transmits the OMCI message to the corresponding ONU device.

In the above-mentioned solution, the management and control request further includes an OLT device identifier of the OLT device connected to the ONU device; the processing module is specifically configured to transmit the OMCI message of the at least one ONU device to a corresponding OLT device based on the OLT device identifier of the OLT device connected to the ONU device.

In the above-mentioned solution, the processing module is configured to receive a device message reported by the PON device.

In the above-mentioned solution, the management and control module is configured to receive a non-OMCI message reported by the OLT device; wherein the non-OMCI message includes at least a message reported by the ONU device; and/or, the OMCI module is configured to receive an OMCI message reported by the OLT device; wherein the OMCI message includes at least a message reported by the ONU device.

An embodiment of the present disclosure further provides an apparatus for device management and control, applied to a cloud platform, the apparatus including: a processor and a memory configured to store a computer program executable on the processor; wherein the processor is configured to perform the steps of any of the above-mentioned methods when the computer program is executed.

An embodiment of the present disclosure further provides a computer readable storage medium having stored thereon a computer program which, when executed by a processor, implements the steps of any of the above-mentioned methods.

With the above-mentioned technical solutions, a plurality of management and control modules are established on the cloud platform, the association relationships between the management and control modules and the PON devices are set, and different PON devices are managed by different management and control modules. For example, different OLT devices or ONU devices are configured. In this way, the ONU devices and OLT devices are managed uniformly on the basis of the cloud platform, thereby overcoming compatibility problems in the management of the ONU devices by the OLT devices of different manufacturers, and improving the management efficiency for the ONU device and the OLT device.

### BRIEF DESCRIPTION OF THE DRAWINGS

FIG. 1 is a first flow chart of a method for device management and control according to an embodiment of the present disclosure;
FIG. 2 is a schematic diagram of an association relationship among devices according to an embodiment of the present disclosure;
FIG. 3 is a second flow chart of a method for device management and control according to an embodiment of the present disclosure;
FIG. 4 is a third flow chart of a method for device management and control according to an embodiment of the present disclosure;
FIG. 5 is a flow chart of the creation of an association relationship according to an embodiment of the present disclosure;
FIG. 6 is a structure diagram of a GPON system according to an embodiment of the present disclosure;
FIG. 7 is a first structure diagram of an apparatus for device management and control according to an embodiment of the present disclosure;
FIG. 8 is a second structure diagram of an apparatus for device management and control according to an embodiment of the present disclosure.

### DETAILED DESCRIPTION

In order that the features and technical contents of the embodiments of the present disclosure may be fully understood, the implementation of the embodiments of the present disclosure will be described in detail with reference to the accompanying drawings, which are provided for purposes of illustration only and are not intended to limit the embodiments of the present disclosure.

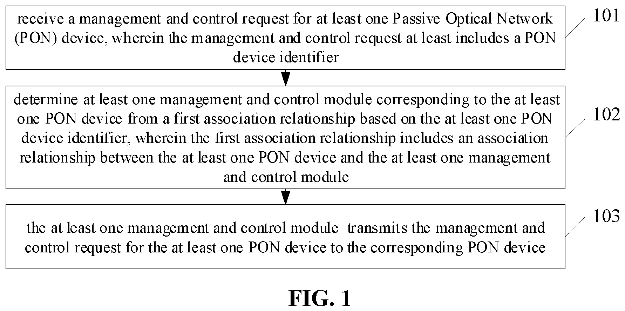

As shown in FIG. 1, the method for device management and control specifically includes steps 101 to 103.

At step 101, a management and control request for at least one Passive Optical Network (PON) device is received. The management and control request includes at least a PON device identifier.

At step 102, at least one management and control module corresponding to the at least one PON device is determined from a first association relationship based on the at least one PON device identifier. The first association relationship includes an association relationship between the at least one PON device and the at least one management and control module.

At Step 103, the at least one management and control module is controlled to transmit the management and control request for the at least one PON device to the corresponding PON device.

Herein, steps 101 to 103 may be executed by a processor at a cloud platform.

Herein, in the GPON system, the PON device mainly includes an OLT device, an ONU device, and an Optical Distribution Network (ODN) device of passive optical devices. Any PON device can be managed and configured by issuing a management and control request to the PON device through the cloud platform.

It is to be noted that the configuration, management and control of the ONU device in the prior art are implemented by the management and control module and the OMCI module of the OLT device. In the present disclosure, the management and control module and the OMCI module of the OLT device of the prior art are separated from each other, and the virtualization device layer (including the management and control module and the OMCI module) is provided in the cloud computing data center (i.e., the cloud platform) to implement unified management of the ONU devices by software.

When the PON device is an Optical Network Unit (ONU) device, the step of controlling the at least one management and control module to transmit the management and control request for the at least one PON device to the corresponding PON device includes the following operations.

It is determined, from a second association relationship, based on at least one ONU device identifier, at least one ONU Management and Control Interface (OMCI) module corresponding to at least one ONU device, the second association relationship includes an association relationship between the at least one ONU device and the at least one OMCI module. The at least one management and control module is controlled to transmit a management and control request for the at least one ONU device to the corresponding OMCI module. The at least one OMCI module is controlled to convert a received management and control request for the ONU device into an OMCI message. The OMCI message for the at least one ONU device is transmitted to the corresponding ONU device based on the at least one ONU device identifier.

Further, the step of transmitting the OMCI message for the at least one ONU device to the corresponding ONU device based on the at least one ONU device identifier includes: transmitting, based on the at least one ONU device identifier, the OMCI message for the at least one ONU device to an Optical Line Terminal (OLT) device connected to the at least one ONU device, the OMCI message enabling the OLT device to transmit the OMCI message to the corresponding ONU device.

The OLT device transmits the OMCI message to the ONU device transparently.

The first association relationship represents the association relationship between the ONU device(s) and the management and control module(s). The second association relationship represents the association relationship between the ONU device(s) and the OMCI module(s). In addition, the association relationship between the management and control module(s) and the OMCI module(s) may further be determined.

Specifically, one management and control module in the first association relationship corresponds to at least one ONU device, and one OMCI module in the second association relationship corresponds to at least one ONU device. Here, the association relationship between the management and control module(s) and the ONU device(s) is determined by the actual processing capability of the management and control module(s), and the association relationship between the OMCI module(s) and the ONU device(s) is determined by the actual processing capability of the OMCI module(s).

In practical applications, when the ONU device(s) is/are managed by the cloud computing data center, the OMCI message issued by the cloud computing data center is forwarded, through an OLT device, to the ONU device(s) connected to the OLT device. In this way, the embodiment of the present disclosure may be directly applied to an existing GPON system without a significant change of the connection structure among the PON devices.

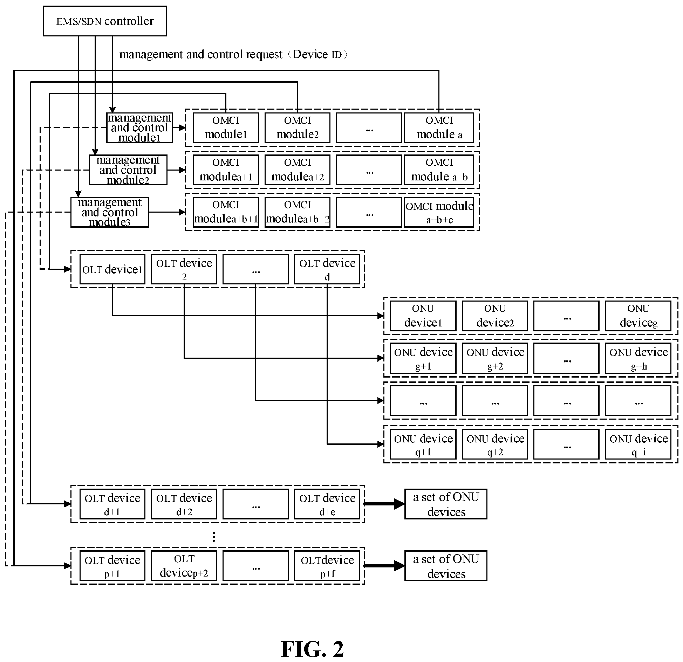

It is to be noted that association relationships are established among the management and control module(s), the OMCI module(s), the OLT device(s), and the ONU device(s) so as to achieve the sequence and accuracy for message issuing and message reporting. The association relationships among the modules or devices is shown in FIG. 2.

FIG. 2 illustrates an association relationship between ONU devices and management and control modules, and an association relationship between ONU devices and OMCI modules. The management and control modules include a management and control module 1, a management and control module 2, and a management and control module 3. Herein, the management and control module 1 corresponds to a first group of OMCI modules, the management and control module 2 corresponds to a second group of OMCI modules, and the management and control module 3 corresponds to a third group of OMCI modules. The three groups of OMCI modules include a, b, and c OMCI modules, respectively. Herein, a, b, and c are integers, and may be equal or unequal to each other.

In particular, the first group of OMCI modules specifically includes OMCI module 1 to OMCI module a, each of which corresponds to a plurality of ONU devices. In practical applications, an OMCI message is forwarded between an OMCI module and an ONU device through an OLT device. That is, it is further required to establish an association relationship between the OMCI modules and the OLT devices. Specifically, OMCI module 1 corresponds to the first group of OLT devices, OMCI module 2 corresponds to the second group of OLT devices, and OMCI module a corresponds to the a-th group of OLT devices. These groups of OLT devices include d, e,... f OLT devices respectively, where d, e, ... , and f are integers, and may be equal or unequal to each other.

In particular, the first group of OLT devices include OLT device 1 to OLT device d. Each OLT device in the first group of OLT devices corresponds to a plurality of ONU devices. Specifically, OLT device 1 corresponds to the first group of ONU devices, OLT device 2 corresponds to the second group of ONU devices, and OLT device d corresponds to the d-th group of ONU devices. Each group of ONU devices includes g, h, ... , i ONU devices; where g, h, ..., and i are integers, and may be equal or unequal to each other. In practice, each OLT device has a plurality of physical ports, each of which is connected to a plurality of ONU devices via a data line.

Similarly, each of the second group of OLT devices and the a-th group of OLT devices correspond to a respective group of ONU devices.

An association relationship between OLT devices and control modules is further shown in FIG. 2. Management and control module 1 corresponds to the first group of OLT devices, management and control module 2 corresponds to the second group of OLT devices, and management and control module 3 corresponds to the a-th group of OLT devices. It is to be noted that the correspondence between the management and control modules and the OLT devices is merely given exemplarily. In practical applications, the correspondence between the management and control module(s) and the OLT device(s) depends on the actual processing capability of the management and control module(s).

In practical applications, the association relationships among the parts are established through the ONU device identifier(s), the OLT device identifier(s), the OMCI module identifier(s), and the management and control module identifier(s). The management and control information is transmitted and received among the management and control module, the OMCI module, the OLT device, and the ONU device that establish the association relationship, thereby achieving the sequence and accuracy for message issuing and message reporting. The association relationships among the instances are shown in Figure 2.

In some embodiments, the method further includes receiving a device message reported by the PON device.

Specifically, the operation of receiving the device message reported by the PON device includes at least one of: controlling the management and control module to receive a non-OMCI message reported by the OLT device; wherein the non-OMCI message includes at least a message reported by the ONU device; and controlling the OMCI module to receive an OMCI message reported by the OLT device; wherein the OMCI message includes at least a message reported by the ONU device.

That is to say, when the ONU device reports the device message, the device message is uploaded to the cloud platform through the OLT device connected to the ONU device. After receiving the message reported by the ONU device, the OLT device determines whether the message is an OMCI message. If yes, the OLT device transmits an OMCI message to the associated OMCI module; if no, the OLT device transmits a non-OMCI message to the associated management and control module; the management and control module reports the message to the upper management system platform, such as an Element Management System (EMS) and a Software Defined Network (SDN) controller.

The non-OMCI message reported by the OLT device includes the non-OMCI message of the ONU device and/or the non-OMCI message of the OLT device itself.

With the above-mentioned technical solution, a plurality of management and control modules are established at the cloud platform, the association relationships between the management and control modules and the PON devices are set, and different PON devices are managed by different management and control modules. For example, different OLT devices or ONU devices are configured. In this way, the ONU devices and OLT devices are managed uniformly on the basis of the cloud platform, thereby overcoming incompatibility problems in management of the ONU devices by the OLT devices of different manufacturers, and improving the management efficiency for the ONU devices and the OLT devices.

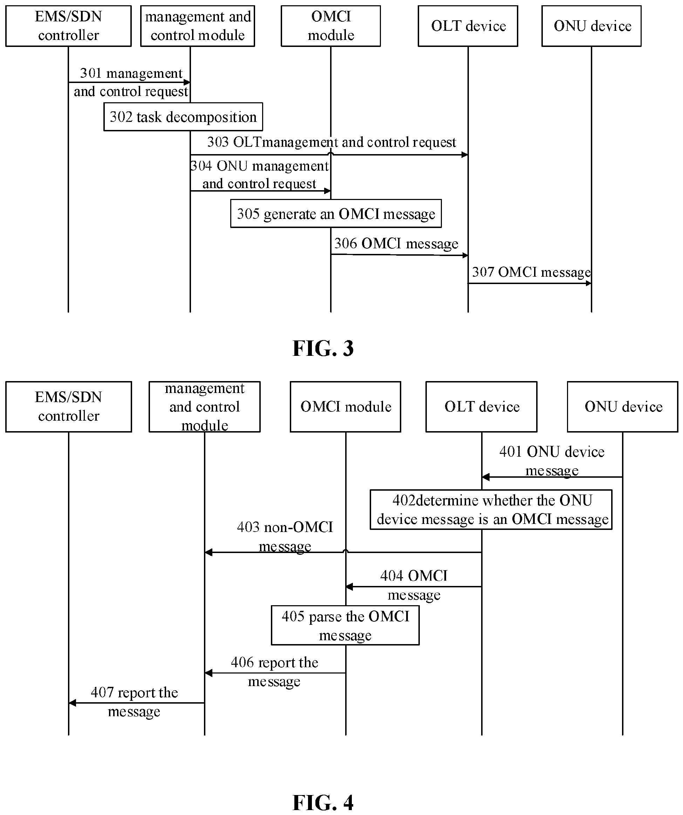

In order to better reflect the objective of the present disclosure, a further example is described which is not part of the invention as claimed. FIG. 3 shows a flow of issuing a management and control request. As shown in FIG. 3, the flow of issuing a management and control request specifically includes steps 301 to 307.

At Step 301, the EMS/SDN controller issues a management and control request for the PON device(s) to the management and control module. The management and control request includes at least a PON device identifier(s).

Herein, the management and control request may be a management and control request for the OLT device(s). Accordingly, the management and control request includes at least the management and control content for the OLT device(s) and the OLT device identifier(s).

The management and control request may alternatively be a management and control request for the ONU device(s). Accordingly, the management and control request includes at least the management and control content for the ONU device(s) and the ONU device identifier(s).

At Step 302, task decomposition is performed on the management and control request.

Herein, the task decomposition is performed on the received management and control request based on the PON device identifier(s), and the decomposed management and control requests are allocated to corresponding management and control modules respectively; different management and control modules receive, analyze and process the management and control requests for the PON device(s) in the respective management and control ranges.

Specifically, at least one management and control module corresponding to the at least one PON device is determined from the first association relationship based on the at least one PON device identifier. The first association relationship includes an association relationship between at least one PON device and a management and control module(s).

Exemplarily, the association relationship between the management and control module(s) and the OLT device(s) is determined by the processing capability of the management and control module(s). Assuming that there are O OLT devices in one GPON access network and each management and control module is capable of handling the configuration and management of C OLT devices, it is required to create T=INT(O/C) management and control modules, where INT(x) denotes an upward rounding function (similarly hereinafter), and the i-th (i>0) management and control module is responsible for configuring and managing the OLT devices in the number range {C^{∗} (i-1), C^{∗}i}. Through converting the device IDs received from the upstream system into an integer sequence starting from 1, it may be obtained that the J-th OLT device should be configured and managed by the Ci-th management and control module according to the equation Ci=INT (J/C). As shown in FIG. 2, the digital serial numbers of the OLT devices start from 1 to p+f, where p is an integer greater than or equal to (d+e), and the digital serial numbers of the OLT devices are used as the OLT device identifiers. Other identification information distinguishing different OLT devices may be alternatively selected as the OLT device identifiers according to the actually established association relationship, which is not specifically limited in this embodiment of the present disclosure.

That is to say, the first association relationship may be Ci=INT(J/C), where Ci is the identifier of the management and control module, J is the identifier of the OLT device, and C is the total number of OLT devices that each management and control module can handle.

In practical applications, for the association relationships among the management and control module(s), the OMCI module(s), the OLT device(s), and the ONU device(s), the relationship between the ONU device(s) and the OLT device(s) is determined through a physical connection, and generally one ONU device is connected to one OLT device through a physical port.

Therefore, after determining the association relationship between management and control module(s) and OLT device(s), a management and control module associated with an OLT device further has an association relationship with at least one ONU device connected to the OLT device.

That is to say, an OLT device connected to an ONU device is determined based on the ONU device identifier; and a management and control module corresponding to the OLT device is taken as the management and control module corresponding to the ONU device.

In practical applications, the management and control module may be a virtual management and control module instance, and the OMCI module may be a virtual OMCI module instance, which are uniformly implemented and deployed in the cloud computing data center by VNF software.

At Step 303, based on the OLT device identifier, the management and control module is controlled to transmit the management and control request for the OLT device to the corresponding OLT device.

Herein, after the management and control requests are allocated to the corresponding management and control modules, the management and control modules issue the management and control requests to the corresponding PON devices according to the PON device identifiers. Step 303 provides a way of issuing a management and control request to an OLT device.

Exemplarily, when the management and control request is issued to the OLT device, it is directly issued to the corresponding OLT device according to the OLT device identifier. For example, when the OLT device identifier is the digital serial number of the OLT device and the digital serial number of the OLT device is 5, the management and control module issues the management and control request to the fifth managed OLT device.

At Step 304, based on an ONU device identifier, an OMCI module corresponding to the ONU device is determined from the second association relationship, and the management and control module is controlled to transmit the ONU device identifier to the corresponding OMCI module.

Exemplarily, after the management and control module determines the correspondence with the OLT devices, the management and control module needs to establish the correspondence with a certain number of OMCI modules and establish the correspondence between the OMCI modules and the OLT device modules corresponding to the management and control module. The number of OMCI modules is determined by the processing capabilities of the OMCI modules. Assuming that each OMCI module is capable of handling the configuration and management of K ONU devices, each management and control module is capable of handling the configuration and management of C OLT devices, each OLT device has N physical ports, and each physical port is connected to M ONU devices, the number of ONUs connected to the C OLTs corresponding to the management and control module is Ot=C^{∗}N^{∗}M, and the number of required OMCI modules is OMCIt=INT(C^{∗}N^{∗}M/K). If all the ONU devices connected to the C OLTs are treated as a continuous device domain, namely, Donu, and are numbered as an integer sequence starting from 1, and the x-th (x>0) OMCI module is responsible for configuring and managing the ONU devices in the number range {K^{∗} (x-1), K^{∗}x}, the serial number of the OMCI module corresponding to the P-th ONU device in Donu is OMCIp=INT(P/K), the OMCIp-th OMCI module must be associated with the OLT device connected to the P-th ONU device, and the OLT device connected to the P-th ONU device is directly determined through the digital serial number of the OLT device in the PON device ID transmitted by the management and control module. Alternatively, the information of the OLT device connected to the ONU device is stored in advance, and the OLT device connected to the ONU device is determined according to the ONU device identifier.

That is to say, the second association relationship may be OMCIp=INT(P/K), wherein OMCIp is the OMCI module identifier, J is the ONU device identifier, and K is the total number of ONU devices that each OMCI module can handle.

As shown in FIG. 2, the digital serial number of ONU devices in the device domain Donu starts from 1 to q+i, wherein q is an integer greater than or equal to (g+h), and the digital serial numbers of the OLT devices are used as the OLT device identifiers. Other identification information distinguishing different OLT devices may be alternatively selected as the OLT device identifiers according to the actually established association relationships, which is not specifically limited in this embodiment of the present disclosure.

At Step 305, the OMCI module is controlled to convert a received management and control request for the ONU device into an OMCI message.

At Step 306, based on the ONU device identifier, the OMCI module is controlled to transmit the OMCI message to the OLT device connected to the ONU device.

At Step 307, the OLT device transmits the OMCI message to the ONU device transparently.

Herein, after the management and control requests are allocated to the corresponding management and control modules, the management and control module issues the management and control requests to the corresponding PON devices according to the PON device identifiers. Steps 304 to 307 provide a way of issuing a management and control requests to ONU devices.

Specifically, the management and control request for the ONU device is allocated to the corresponding OMCI module. The OMCI module receives the management and control request for the ONU device transmitted by the management and control module, creates and generates a specific and uniform OMCI message, determines the OLT device connected to the ONU device according to the ONU device identifier, and transmits the management and control request to the OLT device through an interface between the OMCI module and the OLT device. After receiving the OMCI message transmitted by the OMCI module, the OLT device transmits the OMCI message to the ONU device transparently. After receiving the OMCI message, the ONU device implements the configuration and management of local devices.

In another implementation, the management and control request further includes an OLT device identifier of an OLT device connected to the ONU device. The operation of transmitting an OMCI message for at least one ONU device to at least one OLT device connected to the at least one ONU device includes transmitting the OMCI message of at least one ONU device to the corresponding OLT device based on the OLT device identifier of the OLT device connected to the ONU device.

That is to say, the OMCI module directly transmits the OMCI message to the corresponding OLT device according to the OLT device identifier of the OLT device connected to the ONU device included in the management and control request, and the OLT device transmits the OMCI message to the corresponding ONU device according to the ONU device identifier.

In practical applications, the OLT device includes a plurality of physical ports, and each port is connected to at least one ONU device. Therefore, the management and control request may further include the port numbers of the OLT device connected to the ONU device, and the OLT device transmits the OMCI message to the corresponding ONU device from the corresponding port.

Exemplarily, the management and control request includes a digital serial number of OLT device, a port number of OLT device, and a serial number of ONU. For example, when the digital serial number of OLT device is 5, the port number of OLT device is 6, and the serial number of ONU is 7, it represents the seventh ONU device on the sixth port of the fifth OLT device. Through these device identifiers, the management and control request is distributed to the corresponding management and control module, the ONU configuration and management in the management and control request is distributed to the corresponding OMCI module which transmits the corresponding OMCI message sequence to the corresponding OLT device, and then the corresponding OLT device forwards the corresponding OMCI message sequence to the corresponding ONU device. For reporting a message, it is also required to report correctly the message to the corresponding module through the association relationship.

In this way, the management and control request for the OLT device and the management and control request for the ONU device are issued using the above-mentioned flow of issuing the management and control request.

In order to better reflect the objective of the present disclosure, a further example is described which is not part of the invention as claimed. FIG. 4 shows a flow of reporting a PON device message. As shown in FIG. 4, the method for reporting a message specifically includes steps 401 to 407.

At step 401, the OLT device receives an ONU device message reported by an ONU device.

Herein, for a message reported from the ONU device, such as performance information and a fault alarm, the OLT device receives and analyzes the message, transmits an OMCI message to an associated OMCI module, and transmits a non-OMCI message to a corresponding management and control module. The OMCI module receives and analyzes the OMCI message reported from the OLT device, and performs corresponding processing.

It is to be noted that when the ONU device or the OLT device reports a message, the way for determining the associated OMCI module or management and control module is the same as the way for determining the association relationship in the step of issuing the management and control request in the present disclosure, and details are not described herein.

At Step 402, the OLT device determines whether the ONU device message is an OMCI message, and if no, the method proceeds to Step 403; if yes, the method proceeds to Step 404.

At Step 403, the non-OMCI message is reported to a corresponding management and control module.

At Step 404, the OMCI message is reported to a corresponding OMCI module.

At Step 405, the OMCI module parses the OMCI message.

At Step 406, the OMCI module reports the parsed message to a corresponding management and control module.

Herein, Step 403 is a step of reporting a non-OMCI message, and Steps 404 to 406 are steps of reporting an OMCI message. The sequence of Step 403 and Steps 404-406 is not limited by the sequence of steps in the embodiment of the present disclosure.

At Step 407, the management and control module reports all received messages to an EMS/SDN controller.

It is to be noted that the message of the OLT device itself is directly reported by the OLT device to the corresponding management and control module. The management and control module aggregates all the device messages and reports all the device messages to an upstream EMS/SDN controller. In this way, the PON device message may be reported according to the present disclosure.

In this way, the OLT device message and the ONU device message are reported using the above-mentioned flow of reporting the device message.

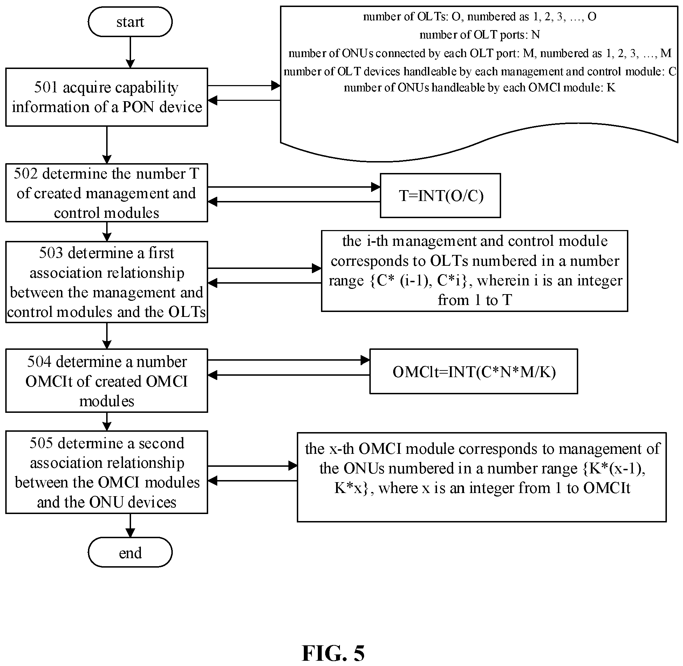

In order to better reflect the above-mentioned association relationship, a method for determining an association relationship is provided according to an embodiment of the present disclosure, which is not part of the invention as claimed. As shown in FIG. 5, the method for determining an association relationship includes steps 501 to 505.

At step 501, capability information of a PON device is acquired.

Exemplarily, the capability information of the PON device includes:
number of OLTs: O, numbered as 1, 2, 3, ..., O;
number of OLT ports: N;
number of ONUs connectable by each OLT port: M, numbered as 1, 2, 3, ..., M;
number of OLT devices handleable by each management and control module: C; and
number of ONUs handleable by each OMCl module: K.

At Step 502, the number T of created management and control modules is determined.

Exemplarily, T=INT(O/C), where INT(x) represents an upward rounding function.

At Step 503, a first association relationship between the management and control module(s) and the OLT(s) is determined.

Exemplarily, the first association relationship is that the i-th management and control module corresponds to OLTs numbered in a number range {C^{∗} (i-1), C^{∗}i}, wherein i is an integer from 1 to T.

At Step 504, a number OMCIt of created OMCI modules is determined.

Exemplarily, OMCIt=INT(C^{∗}N^{∗}M/K); where INT(x) denotes an upward rounding function.

At Step 505, a second association relationship between the OMCI module(s) and the ONU device(s) is determined.

Exemplarily, the second association relationship is that the x-th OMCI module corresponds to the management of the ONU numbered in a number range (K^{∗}(x-1), K^{∗}x}, where x is an integer from 1 to OMCIt.

It is to be noted that a specified number of OLT devices are assigned to each management and control module and each OMCI module. For example, each management and control module is responsible for the configuration and management of at least one OLT device, and one OMCI module is responsible for the configuration and management of all ONU devices connected to the at least one OLT device. The above-mentioned association relationship is merely an example of the present disclosure, and any association relationship is within the scope of the present disclosure regardless of how the association relationship is determined in practical applications.

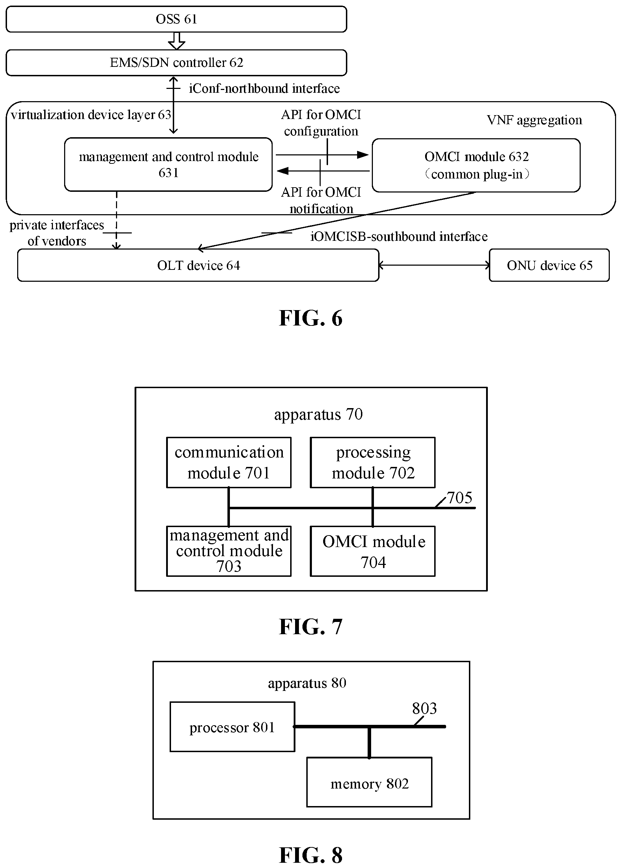

To further reflect the objective of the present disclosure, an architecture of a GPON system is provided. As shown in FIG. 6, the GPON system includes an Operation Support System (OSS) 61, an EMS/SDN controller 62, a virtualization device layer 63, an OLT device 64, and an ONU device 65. The virtualization device layer 63 specifically includes at least one management and management and control module 631 and at least one OMCI module 632.

Herein, for the management and control module 631: the OSS 61 issues a PON management and control request to the management and control module 631 through the EMS/SDN controller 62. Specifically, information is delivered between the EMS/SDN controller 62 and the management and control module 631 through an iConf-northbound interface. The management and control module 631 mainly receives, analyzes and processes the PON management and control request, and distributes, through the iOMCI interface, the OMCI processing request to the OMCI module for processing. The management and control module may be implemented in multiple ways, but in any case, the common feature thereof is that the management and control module transmits or receives messages to the OMCI module or the OLT device through an Application Programming Interface (API).

For the OMCI module 632: the OMCI module 632 provides, to the management and control module 631, an API interface for the ONU management and configuration function, generates an OMCI message based on a uniform standard, transmits the OMCI message to the OLT device through an iOMCISB-southbound interface, and returns, to the management and control module, a message of success or failure of the ONU configuration.

For the OLT device 64: the OLT device 64 is an OLT physical device in the SDN-OLT reconstruction device, and is merely responsible for the transparent transmission of the OMCI message between the OMCI module 632 and the ONU device 65, as compared to conventional OLT devices.

For the ONU device 65: the ONU device 65 receives an OMCI message transmitted transparently by the OLT device 64.

The main interfaces and the main functions thereof are described as follows.

An iConf-northbound interface is an interface between the virtualization device layer 63 and the upper management system platform, such as the EMS/SDN controller 62 and the OSS61, and the management and control module 631 receives and parses the management and control request based on Netconf/Yang.

An iOMCI interface provides API calls to external OMCI functions, such as API for OMCI configuration, API for OMCI notification, and the management and control module generates and creates an OMCI configuration message or receives an OMCI notification message through the iOMCI interface.

An iOMCISB-southbound interface is for the OMCI module 632 to transmit the OMCI message to the OLT device 64.

Managing and controlling the PON device by using the above-mentioned GPON system has at least the following advantages.
1. The management and control module and the OMCI module are uniformly managed at the cloud platform, such that the ONU device and the OLT device are decoupled, and the ONU device can be independently upgraded.
2. A unified and standard OMCI software plug-in or public service platform is provided, which greatly reduces the problem of interworking between the ONU device and the OLT device;
3. The complexity of managing and controlling the PON devices of multiple vendors is reduced, and an interface for device managing and controlling with a next generation broadband access is gradually formed.
4. A unified and standard programmable architecture of the PON device is developed, and flexible upgrading of the PON device and minimization of upgrading costs are realized.

Based on the same inventive concept, an embodiment of the present disclosure further provides an apparatus for device management and control. As shown in FIG. 7, the apparatus 70 includes a communication module 701, a processing module 702, and at least one management and control module 703.

The communication module 701 is configured to receive a management and control request for at least one Passive Optical Network (PON) device. The management and control request includes at least one PON device identifier.

The processing module 702 is configured to determine, from a first association relationship, based on the at least one PON device identifier, at least one management and control module corresponding to the at least one PON device; wherein the first association relationship includes an association relationship between the at least one PON device and the at least one management and control module.

The processing module 702 is further configured to control the at least one management and control module to transmit the management and control request for the at least one PON device to the corresponding PON device.

The apparatus further includes at least one OMCI module 704.

The processing module 702 is specifically configured to determine, from a second association relationship, based on at least one ONU device identifier, at least one OMCI module 704 corresponding to at least one ONU device, when the PON device is an ONU device. The second association relationship includes an association relationship between the at least one ONU device and the at least one OMCI module.

The processing module 702 is further specifically configured to control the at least one management and control module 703 to transmit a management and control request for the at least one ONU device to the corresponding OMCI module; control the at least one OMCI module 704 to convert a received management and control request for the ONU device into an OMCI message; and transmit the OMCI message for the at least one ONU device to the corresponding ONU device based on the at least one ONU device identifier.

The processing module 702 is specifically configured to transmit, based on the at least one ONU device identifier, the OMCI message for the at least one ONU device to an OLT device connected to the at least one ONU device, the OMCI message enabling the OLT device to transmit the OMCI message to the corresponding ONU device.

The management and control request further includes an OLT device identifier of the OLT device connected to the ONU device; and the processing module 702 is specifically configured to transmit the OMCI message for the at least one ONU device to the corresponding OLT device based on the OLT device identifier of the OLT device connected to the ONU device.

The processing module is further configured to receive a device message reported by the PON device.

The processing module 702 is specifically configured to control the management and control module to receive a non-OMCI message reported by the OLT device, the non-OMCI message at least including a message reported by the ONU device; and/or, the processing module is further configured to control the OMCI module to receive an OMCI message reported by the OLT device; the OMCI message at least including a message reported by the ONU device.

In practical applications, the individual modules of the device 70 are coupled together by a bus system 705.

Based on the hardware implementation of each module in the management and control device, an embodiment of the present disclosure further provides another apparatus for device management and control. As shown in FIG. 8, the apparatus 80 includes a processor 801, and a memory 802 configured to store a computer program executable on the processor.

Herein, the processor 801 is configured to perform the steps of the methods in the foregoing embodiments when the computer program is executed.

Of course, in practical applications, as shown in FIG. 8, the various components of the apparatus 80 are coupled together by a bus system 803. It is to be understood that the bus system 803 is used to implement the connection and communication among the components. The bus system 803 further includes a power bus, a control bus, and a status signal bus in addition to a data bus. For the clarity of illustration, however, the various buses are marked as the bus system 803 in FIG. 8.

In practical applications, the forgoing processor may be at least one of an Application Specific Integrated Circuit (ASIC, Application Specific Integrated Circuit), a Digital Signal Processing Device (DSPD, Digital Signal Processing Device), a Programmable Logic Device (PLD, Programmable Logic Device), a Field-Programmable Gate Array (FPGA, Field-Programmable Gate Array), a controller, a microcontroller, and a microprocessor. It is to be understood that for different apparatuses, the electronic elements for implementing the above-mentioned processor functions may be other elements, which are not specifically limited in the embodiments of the present disclosure.

The forgoing memory may be a volatile memory (volatile memory), such as a random access memory (RAM, Random-Access Memory); or a non-volatile memory (non-volatile memory) such as a read-only memory (ROM, Read-Only Memory), a flash memory (flash memory), a hard disk (HDD, Hard Disk Drive) or a solid-state disk (SSD, Solid-State Drive); or a combination of memories of the forgoing types; and may provide instructions and data to the processor.

The present disclosure further provides a computer readable storage medium, such as a memory 802 including a computer program executable by a processor 801 of the apparatus 80, so as to perform the steps of the foregoing methods.

The technical solutions described in the embodiments of the present disclosure may be arbitrarily combined in case of no conflicts.

In the several embodiments provided herein, it is to be understood that the disclosed methods and smart devices may be implemented in other ways. The apparatus embodiments described above are merely illustrative. For example, the unit partitioning is merely logical function partitioning , and may be implemented in another partitioning manner, e.g., a plurality of units or components may be combined, or may be integrated into another system, or some features may be ignored or not performed. In addition, the shown or discussed coupling, or direct coupling, or communication connection of the components therebetween may be through some interfaces, and the indirect coupling or communication connection of devices or units may be electrical, mechanical, or of other forms.

The units described above as separate units may be or may not be physically separate, and the units shown as units may be or may not be physical units, i.e., the units may be located in one place or distributed over a plurality of network units; some or all of the units may be selected as required to achieve the objectives of the embodiments.

In addition, the functional units in the embodiments of the present disclosure may be integrated into one second processing unit, or each unit may be one separate unit, or two or more units may be integrated into one unit; the integrated units may be implemented in the form of hardware or in the form of hardware plus functional units of software.

The foregoing description is merely the specific embodiments of the present disclosure, and the scope of protection of the present disclosure is not limited thereto. The scope of protection is defined solely by the claims as appended.

## Claims

1. A method for device management and control, the method comprising:
receiving (101), by a processor of a cloud platform, a management and control request for at least one Passive Optical Network , PON, device, wherein the management and control request comprises at least one PON device identifier;
determining (102), by the processor of the cloud platform, from a first association relationship, based on the at least one PON device identifier, at least one management and control module corresponding to the at least one PON device, wherein the first association relationship comprises an association relationship between the at least one PON device and the at least one management and control module; and
transmitting (103), by the at least one management and control module, the management and control request for the at least one PON device to the at least one PON device;
**characterized in that**,
when the PON device is an Optical Network Unit, ONU, device, transmitting, by the at least one management and control module, the management and control request for the at least one PON device to the at least one PON device comprises:
determining, from a second association relationship, based on at least one ONU device identifier, at least one ONU Management and Control Interface, OMCI, module corresponding to at least one ONU device; wherein the second association relationship comprises an association relationship between the at least one ONU device and the at least one OMCI module;
transmitting, by the at least one management and control module, a management and control request for the at least one ONU device to the at least one OMCI module;
converting, by the at least one OMCI module, a received management and control request for the at least one ONU device into an OMCI message; and
transmitting the OMCI message for the at least one ONU device to the at least one ONU device based on the at least one ONU device identifier;
wherein transmitting the OMCI message for the at least one ONU device to the at least one ONU device based on the at least one ONU device identifier comprises:
transmitting, based on the at least one ONU device identifier, the OMCI message for the at least one ONU device to an Optical Line Terminal, OLT, device connected to the at least one ONU device, to enable the OLT device to transmit the OMCI message to the at least one ONU device.

2. The method of claim 1, wherein the management and control request further comprises an OLT device identifier of the OLT device connected to the ONU device;
transmitting the OMCI message for the at least one ONU device to an OLT device connected to the at least one ONU device comprises:
transmitting the OMCI message for the at least one ONU device to the at least one OLT device based on the OLT device identifier of the OLT device connected to the at least one ONU device.

3. The method of claim 1 or 2, wherein the method further comprises:
receiving a device message reported by the PON device.

4. The method of claim 3, wherein receiving the device message reported by the PON device comprises at least one of:
receiving, by the management and control module, a non-OMCI message reported by an OLT device; wherein the non-OMCI message comprises at least a message reported by an ONU device; or
receiving, by an OMCI module, an OMCI message reported by the OLT device; wherein the OMCI message comprises at least the message reported by the ONU device.

5. An apparatus for device management and control, applied to a cloud platform, the apparatus comprising: a communication module, a processing module, and at least one management and control module; wherein,
the communication module (701) is configured to receive a management and control request for at least one Passive Optical Network, PON, device; wherein the management and control request comprises at least one PON device identifier;
the processing module (702) is configured to determine, from a first association relationship, based on the at least one PON device identifier, at least one management and control module corresponding to the at least one PON device, wherein the first association relationship comprises an association relationship between the at least one PON device and the at least one management and control module; and
the at least one management and control module (703) is configured to transmit the management and control request for the at least one PON device to the at least one PON device.
**characterized in that**,
the apparatus further comprises at least one ONU Management and Control Interface, OMCI, module (704); wherein,
the processing module is configured to determine, from a second association relationship, based on at least one ONU device identifier, at least one OMCI module corresponding to at least one ONU device, when the PON device is the ONU device, wherein the second association relationship comprises an association relationship between the at least one ONU device and the at least one OMCI module; and
the at least one management and control module is configured to transmit a management and control request for the at least one ONU device to the at least one OMCI module, and the at least one OMCI module is configured to convert a received management and control request for the at least one ONU device into an OMCI message; and transmit the OMCI message for the at least one ONU device to the at least one ONU device based on the at least one ONU device identifier;
wherein the processing module is configured to transmit, based on the at least one ONU device identifier, the OMCI message for the at least one ONU device to an OLT device connected to the at least one ONU device, to enable the OLT device to transmit the OMCI message to the at least one ONU device.

6. The apparatus of claim 5, wherein the management and control request further comprises an OLT device identifier of the OLT device connected to the ONU device; and
the processing module is specifically configured to transmit the OMCI message for the at least one ONU device to the at least one OLT device based on the OLT device identifier of the OLT device connected to the at least one ONU device.

7. The apparatus according to claim 5 or 6, wherein the processing module is configured to receive a device message reported by the PON device.

8. The apparatus of claim 7, wherein at least one of the following applies:
the management and control module is configured to receive a non-OMCI message reported by an OLT device; wherein the non-OMCI message comprises at least a message reported by an ONU device; or
an OMCI module is configured to receive an OMCI message reported by the OLT device; wherein the OMCI message comprises at least a message reported by the ONU device.

9. An apparatus for device management and control, applied to a cloud platform, the apparatus comprising: a processor and a memory configured to store a computer program executable by the processor;
wherein the processor is configured to perform the steps of the method of any one of claims 1 to 4 when the computer program is executed.

10. A computer readable storage medium having stored thereon a computer program which, when executed by a processor, implements the steps of the method of any one of claims 1 to 4.

## Patentansprüche

1. Verfahren für die Verwaltung und Steuerung von Vorrichtungen, wobei das Verfahren umfasst:
Empfangen (101), durch einen Prozessor einer Cloud-Plattform, einer Verwaltungs- und Steueranforderung für wenigstens eine Vorrichtung eines passiven optischen Netzwerks, PON, wobei die Verwaltungs- und Steueranforderung wenigstens eine PON-Vorrichtungskennung umfasst;
Bestimmen (102), durch den Prozessor der Cloud-Plattform, aus einer ersten Assoziationsbeziehung, auf Grundlage der wenigstens einen PON-Vorrichtungskennung, wenigstens eines Verwaltungs- und Steuermoduls, das der wenigstens einen PON-Vorrichtung entspricht, wobei die erste Assoziationsbeziehung eine Assoziationsbeziehung zwischen der wenigstens einen PON-Vorrichtung und dem wenigstens einen Verwaltungs- und Steuermodul umfasst; und
Übertragen (103), durch das wenigstens eine Verwaltungs- und Steuermodul, der Verwaltungs- und Steueranforderung für die wenigstens eine PON-Vorrichtung an die wenigstens eine PON-Vorrichtung;
**dadurch gekennzeichnet, dass**,
wenn die PON-Vorrichtung eine optische Netzwerkeinheit-, ONU-, Vorrichtung ist, das Übertragen der Verwaltungs- und Steueranforderung für die wenigstens eine PON-Vorrichtung an die wenigstens eine PON-Vorrichtung durch das wenigstens eine Verwaltungs- und Steuermodul umfasst:
Bestimmen, aus einer zweiten Assoziationsbeziehung, auf Grundlage wenigstens einer ONU-Vorrichtungskennung, wenigstens eines ONU-Verwaltungs- und -Steuerschnittstellen-, OMCI-, Moduls, das wenigstens einer ONU-Vorrichtung entspricht; wobei die zweite Assoziationsbeziehung eine Assoziationsbeziehung zwischen der wenigstens einen ONU-Vorrichtung und dem wenigstens einen OMCI-Modul umfasst;
Übertragen, durch das wenigstens eine Verwaltungs- und Steuermodul, einer Verwaltungs- und Steueranforderung für die wenigstens eine ONU-Vorrichtung an das wenigstens eine OMCI-Modul;
Umwandeln durch das wenigstens eine OMCI-Modul einer empfangenen Verwaltungs- und Steueranforderung für die wenigstens eine ONU-Vorrichtung in eine OMCI-Nachricht; und
Übertragen der OMCI-Nachricht für die wenigstens eine ONU-Vorrichtung an die wenigstens eine ONU-Vorrichtung auf Grundlage der wenigstens einen ONU-Vorrichtungskennung;
wobei das Übertragen der OMCI-Nachricht für die wenigstens eine ONU-Vorrichtung an die wenigstens eine ONU-Vorrichtung auf Grundlage der wenigstens einen ONU-Vorrichtungskennung umfasst:
Übertragen der OMCI-Nachricht für die wenigstens eine ONU-Vorrichtung auf Grundlage der wenigstens einen ONU-Vorrichtungskennung an eine mit der wenigstens einen ONU-Vorrichtung verbundene optische Leitungsterminal-, OLT-, Vorrichtung, um die OLT-Vorrichtung in die Lage zu versetzen, die OMCI-Nachricht an die wenigstens eine ONU-Vorrichtung zu übertragen.

2. Verfahren nach Anspruch 1, wobei die Verwaltungs- und Steueranforderung ferner eine OLT-Vorrichtungskennung der mit der ONU-Vorrichtung verbundenen OLT-Vorrichtung umfasst;
das Übertragen der OMCI-Nachricht für die wenigstens eine ONU-Vorrichtung an eine OLT-Vorrichtung, die mit der wenigstens einen ONU-Vorrichtung verbunden ist, umfasst:
Übertragen der OMCI-Nachricht für die wenigstens eine ONU-Vorrichtung an die wenigstens eine OLT-Vorrichtung auf Grundlage der OLT-Vorrichtungskennung der OLT-Vorrichtung, die mit der wenigstens einen ONU-Vorrichtung verbunden ist.

3. Verfahren nach Anspruch 1 oder 2, wobei das Verfahren ferner umfasst:
Empfangen einer von der PON-Vorrichtung gemeldeten Vorrichtungsnachricht.

4. Verfahren nach Anspruch 3, wobei das Empfangen der von der PON-Vorrichtung gemeldeten Vorrichtungsnachricht wenigstens eines umfasst von:
Empfangen einer von einer OLT-Vorrichtung gemeldeten Nicht-OMCI-Nachricht durch das Verwaltungs- und Steuermodul; wobei die Nicht-OMCI-Nachricht wenigstens eine von einer ONU-Vorrichtung gemeldete Nachricht umfasst; oder
Empfangen einer von der OLT-Vorrichtung gemeldeten OMCI-Nachricht durch ein OMCI-Modul; wobei die OMCI-Nachricht wenigstens die von der ONU-Vorrichtung gemeldete Nachricht umfasst.

5. Einrichtung für die Verwaltung und Steuerung von Vorrichtungen, die auf eine Cloud-Plattform angewendet wird, wobei die Vorrichtung umfasst: ein Kommunikationsmodul, ein Verarbeitungsmodul und wenigstens ein Verwaltungs- und Steuermodul; wobei,
das Kommunikationsmodul (701) dazu konfiguriert ist, eine Verwaltungs- und Steueranforderung für wenigstens eine Vorrichtung eines passiven optischen Netzwerks, PON, zu empfangen, wobei die Verwaltungs- und Steueranforderung wenigstens eine PON-Vorrichtungskennung umfasst;
das Verarbeitungsmodul (702) dazu konfiguriert ist, aus einer ersten Assoziationsbeziehung auf Grundlage der wenigstens einen PON-Vorrichtungskennung wenigstens ein Verwaltungs- und Steuermodul zu bestimmen, das der wenigstens einen PON-Vorrichtung entspricht, wobei die erste Assoziationsbeziehung eine Assoziationsbeziehung zwischen der wenigstens einen PON-Vorrichtung und dem wenigstens einen Verwaltungs- und Steuermodul umfasst; und
das wenigstens eine Verwaltungs- und Steuermodul (703) dazu konfiguriert ist, die Verwaltungs- und Steueranforderung für die wenigstens eine PON-Vorrichtung an die wenigstens eine PON-Vorrichtung zu übertragen,
**dadurch gekennzeichnet, dass**,
die Einrichtung ferner wenigstens ein ONU-Verwaltungs- und -Steuerschnittstellen-, OMCI-, Modul umfasst, wobei
das Verarbeitungsmodul dazu konfiguriert ist, aus einer zweiten Assoziationsbeziehung auf Grundlage wenigstens einer ONU-Vorrichtungskennung wenigstens ein OMCI-Modul zu bestimmen, das wenigstens einer ONU-Vorrichtung entspricht, wenn die PON-Vorrichtung die ONU-Vorrichtung ist, wobei die zweite Assoziationsbeziehung eine Assoziationsbeziehung zwischen der wenigstens einen ONU-Vorrichtung und dem wenigstens einen OMCI-Modul umfasst;
das wenigstens eine Verwaltungs- und Steuermodul dazu konfiguriert ist, eine Verwaltungs- und Steueranforderung für die wenigstens eine ONU-Vorrichtung an das wenigstens eine OMCI-Modul zu übertragen und das wenigstens eine OMCI-Modul dazu konfiguriert ist, eine empfangene Verwaltungs- und Steueranforderung für die wenigstens eine ONU-Vorrichtung in eine OMCI-Nachricht umzuwandeln; und die OMCI-Nachricht für die wenigstens eine ONU-Vorrichtung an die wenigstens eine ONU-Vorrichtung auf Grundlage der wenigstens einen ONU-Vorrichtungskennung zu übertragen;
wobei das Verarbeitungsmodul dazu konfiguriert ist, die OMCI-Nachricht für die wenigstens eine ONU-Vorrichtung an die wenigstens eine ONU-Vorrichtung auf Grundlage der wenigstens einen ONU-Vorrichtungskennung zu übertragen, um die OLT-Vorrichtung in die Lage zu versetzen, die OMCI-Nachricht an die wenigstens eine ONU-Vorrichtung zu übertragen.

6. Einrichtung nach Anspruch 5, wobei die Verwaltungs- und Steueranforderung ferner eine OLT-Vorrichtungskennung der OLT-Vorrichtung umfasst, die mit der ONU-Vorrichtung verbunden ist; und
das Verarbeitungsmodul spezifisch dazu konfiguriert ist, die OMCI-Nachricht für die wenigstens eine ONU-Vorrichtung an die wenigstens eine OLT-Vorrichtung auf Grundlage der OLT-Vorrichtungskennung der OLT-Vorrichtung, die mit der wenigstens einen ONU-Vorrichtung verbunden ist, zu übertragen.

7. Einrichtung nach Anspruch 5 oder 6, wobei das Verarbeitungsmodul dazu konfiguriert ist, eine Vorrichtungsnachricht zu empfangen, die von der PON-Vorrichtung gemeldet wird.

8. Einrichtung nach Anspruch 7, wobei wenigstens eines der Folgenden zutrifft:
das Verwaltungs- und Steuermodul ist dazu konfiguriert, eine von einer OLT-Vorrichtung gemeldete Nicht-OMCI-Nachricht zu empfangen; wobei die Nicht-OMCI-Nachricht wenigstens eine von einer ONU-Vorrichtung gemeldete Nachricht umfasst; oder
ein OMCI-Modul ist dazu konfiguriert, eine von der OLT-Vorrichtung gemeldete OMCI-Nachricht zu empfangen, wobei die OMCI-Nachricht wenigstens eine von der ONU-Vorrichtung gemeldete Nachricht umfasst.

9. Einrichtung für die Verwaltung und Steuerung von Vorrichtungen, die auf eine Cloud-Plattform angewendet wird, wobei die Einrichtung umfasst: einen Prozessor und einen Speicher, der dazu konfiguriert ist, ein von dem Prozessor ausführbares Computerprogramm zu speichern;
wobei der Prozessor dazu konfiguriert ist, die Schritte des Verfahrens nach einem der Ansprüche 1 bis 4 durchzuführen, wenn das Computerprogramm ausgeführt wird.

10. Computerlesbares Speichermedium mit darauf gespeichertem Computerprogramm, das, wenn es von einem Prozessor ausgeführt wird, die Schritte des Verfahrens nach einem der Ansprüche 1 bis 4 implementiert.

## Revendications

1. Procédé de gestion et de commande de dispositif, le procédé comprenant :
la réception (101), par un processeur d'une plateforme cloud, d'une demande de gestion et de contrôle pour au moins un dispositif de réseau optique passif, PON, la demande de gestion et de contrôle comprenant au moins un identifiant de dispositif PON ;
la détermination (102), par le processeur de la plateforme cloud, à partir d'une première relation d'association, sur la base dudit au moins un identifiant de dispositif PON, d'au moins un module de gestion et de contrôle correspondant audit au moins un dispositif PON, dans lequel la première relation d'association comprend une relation d'association entre l'au moins un dispositif PON et l'au moins un module de gestion et de contrôle ; et
la transmission (103), par l'au moins un module de gestion et de contrôle, de la demande de gestion et de contrôle pour l'au moins un dispositif PON à l'au moins un dispositif PON ;
**caractérisé en ce que**,
lorsque le dispositif PON est un dispositif d'unité de réseau optique, ONU, la transmission, par l'au moins un module de gestion et de contrôle, de la demande de gestion et de contrôle pour l'au moins un dispositif PON à l'au moins un dispositif PON comprend :
la détermination, à partir d'une deuxième relation d'association, sur la base d'au moins un identifiant de dispositif ONU, d'au moins un module d'interface de gestion et de contrôle d'ONU, OMCI, correspondant à au moins un dispositif ONU ; dans lequel la deuxième relation d'association comprend une relation d'association entre l'au moins un dispositif ONU et l'au moins un module OMCI ;
la transmission, par l'au moins un module de gestion et de contrôle, d'une demande de gestion et de contrôle pour l'au moins un dispositif ONU à l'au moins un module OMCI ;
la conversion, par l'au moins un module OMCI, d'une demande de gestion et de contrôle reçue pour l'au moins un dispositif ONU en un message OMCI ; et
la transmission du message OMCI pour l'au moins un dispositif ONU à l'au moins un dispositif ONU sur la base de l'au moins un identifiant de dispositif ONU ;
dans lequel la transmission du message OMCI pour l'au moins un dispositif ONU à l'au moins un dispositif ONU sur la base de l'au moins un identifiant de dispositif ONU comprend :
la transmission, sur la base de l'au moins un identifiant de dispositif ONU, du message OMCI pour l'au moins un dispositif ONU à un dispositif de terminal de ligne optique, OLT, connecté à l'au moins un dispositif ONU, pour permettre au dispositif OLT de transmettre le message OMCI à l'au moins un dispositif ONU

2. Procédé selon la revendication 1, dans lequel la demande de gestion et de contrôle comprend en outre un identifiant de dispositif OLT du dispositif OLT connecté au dispositif ONU;
la transmission du message OMCI pour l'au moins un dispositif ONU à un dispositif OLT connecté à l'au moins un dispositif ONU comprend :
la transmission du message OMCI pour l'au moins un dispositif ONU à l'au moins un dispositif OLT sur la base de l'identifiant de dispositif OLT du dispositif OLT connecté à l'au moins un dispositif ONU

3. Procédé selon la revendication 1 ou 2, dans lequel le procédé comprend en outre :
la réception d'un message de dispositif rapporté par le dispositif PON.

4. Procédé selon la revendication 3, dans lequel la réception du message de dispositif rapporté par le dispositif PON comprend au moins l'une de :
la réception, par le module de gestion et de contrôle, d'un message non OMCI rapporté par un dispositif OLT ; dans lequel le message non OMCI comprend au moins un message rapporté par un dispositif ONU ; ou
la réception, par un module OMCI, d'un message OMCI rapporté par le dispositif OLT ; dans lequel le message OMCI comprend au moins le message rapporté par le dispositif ONU

5. Appareil de gestion et de contrôle de dispositif, appliqué à une plateforme cloud, l'appareil comprenant : un module de communication, un module de traitement et au moins un module de gestion et de contrôle ; dans lequel,
le module de communication (701) est configuré pour recevoir une demande de gestion et de contrôle pour au moins un dispositif de réseau optique passif, PON ; dans lequel la demande de gestion et de contrôle comprend au moins un identifiant de dispositif PON ;
le module de traitement (702) est configuré pour déterminer, à partir d'une première relation d'association, sur la base de l'au moins un identifiant de dispositif PON, au moins un module de gestion et de contrôle correspondant à l'au moins un dispositif PON, dans lequel la première relation d'association comprend un relation d'association entre l'au moins un dispositif PON et l'au moins un module de gestion et de contrôle ; et
l'au moins un module de gestion et de contrôle (703) est configuré pour transmettre la demande de gestion et de contrôle pour l'au moins un dispositif PON à l'au moins un dispositif PON,
**caractérisé en ce que**,
l'appareil comprend en outre au moins un module d'interface de gestion et de contrôle d'ONU, OMCI (704) ; dans lequel,
le module de traitement est configuré pour déterminer, à partir d'une deuxième relation d'association, sur la base d'au moins un identifiant de dispositif ONU, au moins un module OMCI correspondant à au moins un dispositif ONU, lorsque le dispositif PON est le dispositif ONU, dans lequel la deuxième relation d'association comprend une relation d'association entre l'au moins un dispositif ONU et l'au moins un module OMCI ; et
l'au moins un module de gestion et de contrôle est configuré pour transmettre une demande de gestion et de contrôle pour l'au moins un dispositif ONU à l'au moins un module OMCI, et l'au moins un module OMCI est configuré pour convertir une demande de gestion et de contrôle reçue pour l'au moins un dispositif ONU dans un message OMCI ; et transmettre le message OMCI pour l'au moins un dispositif ONU à l'au moins un dispositif ONU sur la base de l'au moins un identifiant de dispositif ONU ;
dans lequel le module de traitement est configuré pour transmettre, sur la base de l'au moins un identifiant de dispositif ONU, le message OMCI pour l'au moins un dispositif ONU à un dispositif OLT connecté à l'au moins un dispositif ONU, pour permettre au dispositif OLT de transmettre le message OMCI à l'au moins un dispositif ONU

6. Appareil selon la revendication 5, dans lequel la demande de gestion et de contrôle comprend en outre un identifiant de dispositif OLT du dispositif OLT connecté au dispositif ONU; et
le module de traitement est spécifiquement configuré pour transmettre le message OMCI pour l'au moins un dispositif ONU à l'au moins un dispositif OLT sur la base de l'identifiant de dispositif OLT du dispositif OLT connecté à l'au moins un dispositif ONU.

7. Appareil selon la revendication 5 ou 6, dans lequel le module de traitement est configuré pour recevoir un message de dispositif rapporté par le dispositif PON.

8. Appareil selon la revendication 7, dans lequel au moins l'un des éléments suivants s'applique :
le module de gestion et de contrôle est configuré pour recevoir un message non OMCI rapporté par un dispositif OLT ; dans lequel le message non OMCI comprend au moins un message rapporté par un dispositif ONU ; ou
un module OMCI est configuré pour recevoir un message OMCI rapporté par le dispositif OLT ; dans lequel le message OMCI comprend au moins un message rapporté par le dispositif ONU

9. Appareil de gestion et de contrôle de dispositif, appliqué à une plateforme cloud, l'appareil comprenant : un processeur et une mémoire configurée pour stocker un programme informatique exécutable par le processeur ;
dans lequel le processeur est configuré pour exécuter les étapes du procédé selon l'une quelconque des revendications 1 à 4 lorsque le programme informatique est exécuté.

10. Support de stockage lisible par ordinateur sur lequel est stocké un programme informatique qui, lorsqu'il est exécuté par un processeur, met en oeuvre les étapes du procédé selon l'une quelconque des revendications 1 à 4.
